# FASCICULE DE BREVET EUROPEEN

(11) **EP 0 879 574 B1**
(45) Date de publication et mention de la délivrance du brevet: **26.09.2001**
(21) Numéro de dépôt: 98420080.8
(22) Date de dépôt: 12.05.1998
(51) Int. Cl.: A47J 39/00

(54) **Procédé et dispositif pour la distribution collective de repas**
Verfahren und Vorrichtung zum Verteilen von Gemeinschaftsverpflegung
method and device for the distribution of canteen meals

(30) Priorité: 16.05.1997 FR 9706359; 04.08.1997 FR 9710181
(43) Date de publication de la demande: 25.11.1998
(73) Titulaire: SOCIETE COOPERATIVE DE PRODUCTION BOURGEOIS, 74210 Faverges (FR)
(72) Inventeur: Violi, Jean-Charles, 74210 Marlens (FR); Violi, Raymond, 74210 Marlens (FR); Ferbus, Jean-Francois, 74210 Seythenex (FR)
(74) Mandataire: Poncet, Jean-François

(56) Documents cités:
- EP-A- 0 546 968
- EP-A- 0 838 188
- DE-A- 2 711 088
- DE-A- 3 125 842
- DE-A- 4 303 199
- FR-A- 2 285 836
- FR-A- 2 349 112
- FR-A- 2 604 882
- US-A- 3 974 358

## Description

La présente invention concerne les procédés et dispositifs permettant la distribution en liaison froide et la remise à température des aliments, notamment d'aliments disposés sur des plateaux repas provenant de cuisines collectives où ils sont préparés.

On connaît déjà des dispositifs pour la distribution et le conditionnement de repas provenant de cuisines collectives, et notamment le dispositif décrit dans le document FR 2 442 035 A, dans lequel les aliments sont préparés et disposés, en cuisine collective, sur des plateaux comportant une première partie pour les aliments destinés à être consommés chauds, et une seconde partie distincte pour les aliments destinés à être consommés froids. Les plateaux sont placés sur un chariot collectif isotherme spécifique, entraîné manuellement, qui comporte une paroi verticale à fentes pour séparer et isoler les zones froides des plateaux par rapport aux zones chaudes des plateaux, et qui peut être accouplé à une borne fixe de soufflage d'air froid ou de soufflage d'air chaud. Ainsi, en laissant le chariot accouplé à la borne, on peut conserver au frais les repas préparés à l'avance, et réchauffer la partie destinée à être consommée chaude avant de distribuer les plateaux.

Dans le document FR 2 383 637 A, correspondant aux US 4 020 310 A, US 4 110 587 A et DE 27 11 088 A, sur les plateaux les aliments à réchauffer sont disposés sur des assiettes en matière plastique dont la face supérieure est recouverte d'une écuelle en aluminium mince, les assiettes étant surmontées d'un couvercle amovible isolant dont la face intérieure est revêtue d'une feuille métallique. Une dizaine de plateaux sont supportés, dans un chariot collectif isotherme, les uns au dessous des autres selon un écartement approprié, et une série de tablettes d'induction, solidaires d'une borne fixe à laquelle vient s'accoupler le chariot, viennent s'engager entre les plateaux successifs dans la zone de réchauffage des plateaux. Les bobines d'induction, parcourues par un courant électrique alternatif à haute fréquence, génèrent un champ magnétique alternatif à haute fréquence qui échauffe par induction magnétique l'écuelle recouvrant l'assiette et la face inférieure métallique du couvercle.

Ces dispositifs connus de distribution collective à chariot isotherme collectif et borne fixe comportent plusieurs inconvénients. Tout d'abord, tous les plateaux d'un même chariot sont remis en température simultanément, de sorte que leur distribution est nécessairement simultanée, sans possibilité de décalage d'horaires entre les consommateurs. Ensuite, la distribution des plateaux nécessite l'intervention du personnel, qui doit donc être disponible au moment de la consommation sans possibilité de décalage d'horaires entre le personnel et la prise de repas. Egalement, les chariots ont nécessairement une structure complexe, assurant d'une part l'isolation thermique avec l'extérieur, mais également une isolation thermique entre les parties de plateau devant rester froides et les parties de plateau supportant les aliments à réchauffer. Il en résulte que le dispositif est onéreux à la fois à la construction, et à l'utilisation. Egalement, au moment des repas, le personnel doit distribuer les plateaux à plusieurs consommateurs. Les conditions habituelles de distribution montrent que celle-ci est relativement longue et nécessite le transport des aliments qui sont alors exposés à l'air, de sorte que l'hygiène n'est généralement pas respectée.

Les mêmes inconvénients se retrouvent avec le dispositif décrit dans le document FR 2 349 112 A, dans lequel deux chariots portant chacun une vingtaine de plateaux repas sont introduits dans une enceinte réfrigérée. Des résistances électriques noyées dans chaque plateau permettent de remettre à température les aliments destinés à être consommés chauds. En outre, l'échauffement du plateau par les résistances électriques qu'il contient produit inévitablement un échauffement inacceptable des aliments destinés à être consommés froids.

On connaît par ailleurs, dans le document FR 2 604 882 A, une unité individuelle de conservation et de réchauffement des repas pour les distributions anticipées dans les collectivités. Ce dispositif est une enceinte individuelle fermée, délimitée par une paroi périphérique thermiquement isolante, et munie d'une porte d'accès. Son espace intérieur est divisé en plusieurs petits compartiments isolés les uns des autres par des parois isolantes fixes, deux compartiments au moins étant refroidis par un générateur de froid, l'un des deux compartiments refroidis pouvant être réchauffé par un générateur de chaud. Avec un tel dispositif, le personnel peut distribuer les repas de façon temporellement décalée par rapport aux heures de prise de repas, et les heures de prise de repas peuvent être choisies individuellement pour chaque utilisateur. Cependant, les aliments chauds et froids ne peuvent pas être conditionnés sur un même plateau repas à l'intérieur du dispositif. Lors de la distribution des repas, le personnel doit introduire séparément, dans l'un et l'autre des compartiments, respectivement les aliments devant rester froids et les aliments à réchauffer. Il en résulte une distribution plus complexe, et des risques d'erreurs. En outre, lors de la prise du repas, le consommateur doit sortir séparément les aliments chauds et les aliments froids, pour les replacer éventuellement sur un plateau. De telles manipulations induisent des risques de brûlure par contact des plats chauds, et requièrent une capacité et une agilité suffisantes du consommateur, ce qui limite les applications du dispositif, notamment dans la distribution de repas en hôpital.

Le problème proposé par la présente invention est de concevoir un nouveau procédé et une nouvelle structure de dispositif pour la conservation, la distribution et le conditionnement de repas provenant de cuisines collectives, permettant à la fois de conserver les repas qui ont été préalablement préparés sur des plateaux comportant une première partie pour les aliments destinés à être consommés chauds et éventuellement une seconde partie distincte pour les aliments destinés à être consommés froids, et permettant une distribution complète en liaison froide des plateaux repas depuis la cuisine collective jusqu'au consommateur. Après une distribution des plateaux repas qui peut être effectuée de façon anticipée par rapport aux horaires des repas, tous les aliments doivent être maintenus au froid à une température appropriée pour leur conservation, puis les aliments destinés à être consommés chauds doivent être remis à température sans nécessiter aucune autre manipulation juste avant l'heure individuelle de consommation, les aliments à consommer froids restant à une température froide appropriée. Le consommateur doit disposer de son plateau repas sans que cela nécessite une intervention supplémentaire du personnel de distribution.

Il est important, pour le respect de l'hygiène, d'éviter le développement des bactéries sur les aliments. La difficulté est d'assurer l'hygiène tout en mettant à disposition du consommateur les aliments chauds à une température à coeur voisine de 65°C, et les aliments froids à une température à coeur de 8°C environ.

Un autre problème proposé par la présente invention est à la fois de réduire le coût du matériel nécessaire à la distribution collective de repas, notamment en évitant le recours à des chariots spécifiques onéreux, et de faciliter la mise en oeuvre de ce matériel en prévoyant un procédé spécifique évitant les manipulations délicates d'aliments lors de la distribution et lors de la prise des repas, libérant le personnel de distribution des contraintes d'horaires, et permettant la prise de repas individuels par des personnes manquant d'agilité.

Pour atteindre ces objets ainsi que d'autres, l'invention prévoit un dispositif selon la revendication indépendante 1.

Une unité individuelle selon l'invention définit un compartiment unique pouvant être utilisé comme réfrigérateur d'aliments, et pouvant être utilisé simultanément comme four de remise à température d'aliments. Des avantages supplémentaires importants résultent de la position particulière de la source de chaleur : le volume à chauffer est réduit, réduisant ainsi la consommation d'énergie pour la remise en température et le maintien au froid simultanés ; la structure d'enceinte est simplifiée car aucune cloison isolante intermédiaire n'est nécessaire ; l'entretien et le nettoyage sont facilités.

De préférence, pour améliorer la répartition de chaleur dans l'espace intérieur entre la cloche et le plateau contenant les aliments à réchauffer, et, simultanément, pour réduire l'échauffement du reste de l'enceinte contenant les aliments devant rester froids, le dispositif est tel que :
- la cloche comprend une enveloppe externe thermiquement isolante et une couche inférieure de diffusion métallique conductrice de la chaleur,
- le plateau comprend une structure de base thermiquement isolante formant la surface externe inférieure et périphérique, et recouverte, sur au moins la partie recevant la cloche, d'une couche supérieure de diffusion métallique conductrice de la chaleur,
- la couche supérieure de diffusion du plateau vient en contact de la couche inférieure de diffusion de la cloche en périphérie de l'espace intérieur.

Il est important, pendant la période de remise en température, de maintenir au froid la partie d'aliment destinée à être consommée froide. Pour cela, le maintien au froid est amélioré sensiblement en logeant la source de chaleur en face intérieure de la cloche.

On améliore encore le maintien au froid de la partie d'aliment destinée à rester froide en recouvrant les couches de diffusion, sur leur face apparente, avec une couche de polytétrafluoroéthylène noir ou d'émail noir.

Une amélioration du réchauffement des aliments est obtenue en prévoyant au moins deux orifices ménagés en des zones opposées de partie inférieure de paroi périphérique entourant l'espace intérieur. Par exemple, les orifices peuvent être des encoches ou des déformations ménagées dans le bord de contact de la cloche et du corps de plateau.

Selon un premier mode de réalisation, la source de chaleur est une plaque intermédiaire en matériau réchauffable par induction magnétique au contact avec la couche de diffusion de cloche, et l'enceinte est munie d'un générateur de champ d'induction magnétique disposé à proximité de la face supérieure de cloche.

Selon un second mode de réalisation de l'invention, la source de chaleur est une résistance électrique connectée électriquement à deux bornes externes de la cloche, l'enceinte comprenant des bornes de contact correspondantes agencées pour venir en contact des bornes externes de cloche pour assurer la connexion électrique de la résistance à une source extérieure d'énergie électrique lorsque le plateau est supporté dans l'enceinte.

Une meilleure isolation thermique entre la zone chaude d'aliments et la zone froide d'aliments est obtenue en plaçant la source de chaleur en face intérieure de la cloche. En complément, on peut prévoir des moyens d'extraction d'air dans la zone d'enceinte contenant la première partie de plateau repas, à l'extérieur de la cloche. En outre, un volet transversal escamotable peut être prévu pour s'interposer entre la première partie chaude de plateau et la seconde partie froide de plateau.

La cloche peut être soit un élément amovible ou relevable distinct, posé sur la première partie de plateau, soit un élément solidaire de l'enceinte et associé à des moyens d'entraînement assurant un déplacement relatif vertical de la cloche et du plateau l'un vers ou à l'écart de l'autre.

La position de la source de chaleur en face intérieure de la cloche réduit l'échauffement du plateau, et facilite ainsi sa manutention après remise à température. Il est également avantageux de positionner les moyens de transmission d'énergie dans la partie de l'enceinte la plus éloignée de la porte, de sorte que l'utilisateur peut tenir naturellement le plateau par sa seconde partie froide après l'étape de remise à température, sans risque de brûlure.

Selon l'invention, un dispositif pour la distribution collective complète de repas peut comprendre :
- une pluralité de plateaux individuels ayant une première partie conformée pour porter une portion de repas destinée à être consommée chaude et une seconde partie conformée pour porter une portion de repas destinée à être consommée froide, avec une cloche amovible thermiquement isolante adaptable sur la première partie de plateau pour recouvrir la portion de repas destinée à être consommée chaude,
- des moyens de transport ayant une enceinte conformée pour contenir un nombre approprié de plateaux individuels portant les repas et entourée d'une paroi thermiquement isolante munie d'une porte de chargement et de déchargement,
- une pluralité d'unités individuelles de réfrigération et de remise à température de repas.

De préférence, selon l'invention, les moyens de transport comprennent au moins un chariot déplaçable manuellement, constitué d'un bâti à roulettes supportant la paroi périphérique thermiquement isolante entourant une enceinte non compartimentée ayant des glissières latérales pour supporter une pile de plateaux individuels.

De préférence, l'unité individuelle est généralement parallélépipédique, avec une porte d'accès fermant un petit côté, avec des glissières latérales prévues en face intérieure des grands côtés, les grands côtés étant espacés d'une largeur appropriée pour l'engagement en long du ou des plateaux individuels qui viennent en appui par leur grands bords latéraux sur les glissières latérales.

Selon un mode de réalisation avantageux, l'unité individuelle est portée par un bâti à roulettes et présente une forme générale parallélépipédique de dimensions appropriées pour constituer une table de nuit placée à côté d'un lit d'hôpital.

Un procédé pour la distribution collective de repas selon l'invention est tel que :
a) on prépare les repas et on les dispose sur des plateaux individuels en cuisine collective, les plateaux individuels ayant une première partie de plateau individuel portant la portion de repas destinée à être consommée chaude, les plateaux individuels ayant une seconde partie de plateau individuel portant la portion de repas destinée à être consommée froide, ladite première partie de plateau individuel pouvant recevoir une cloche thermiquement isolante,
b) on transporte lesdits plateaux individuels garnis de repas dans l'enceinte thermiquement isolée d'un moyen de transport isotherme jusque sur les lieux de consommation,
c) on répartit lesdits plateaux individuels garnis de repas dans des unités individuelles de réfrigération et de remise à température de repas prévues dans chaque lieu de consommation et directement accessibles par le consommateur,
d) on réchauffe sélectivement les portions de repas destinées à être consommées chaudes sur les plateaux individuels placés dans les unités individuelles en utilisant des sources de chaleur individuelles réchauffant les aliments placés sous les cloches.

On comprendra que l'ensemble des plateaux à distribuer en provenance d'une cuisine collective peut être contenu dans un chariot ou un porteur réfrigéré, et le plateau est ensuite introduit sans rupture de liaison froide dans l'unité individuelle selon l'invention.

L'invention présente en outre l'avantage que, après consommation des aliments, l'utilisateur peut remettre le plateau et les déchets dans l'enceinte de l'unité individuelle pour conserver l'ensemble au froid jusqu'à reprise par le personnel de distribution. On comprendra que, appliqué par exemple à des hôpitaux, un tel dispositif réduit très sensiblement les risques de développement de germes, tout en libérant le personnel de la contrainte des heures de repas, et en permettant une plus grande souplesse dans les horaires individuels de prises de repas.

D'autres objets, caractéristiques et avantages de la présente invention ressortiront de la description suivante de modes de réalisation particuliers, faite en relation avec les figures jointes, parmi lesquelles:
- la figure 1 est une vue en perspective d'un dispositif selon un mode de réalisation simplifié de la présente invention ;
- la figure 2 est une vue schématique de dessus en coupe du dispositif de la figure 1 ;
- la figure 3 est une vue de face en coupe transversale d'un plateau repas adapté pour un usage dans un dispositif de la présente invention ;
- la figure 4 illustre, de façon schématique, un moyen de transmission d'énergie selon un mode de réalisation de la présente invention ;
- la figure 5 est une vue illustrant un détail de réalisation de borne fixe selon le mode de réalisation de la figure 4 ;
- la figure 6 est une vue schématique de dessus illustrant les bornes de connexion du dispositif de la figure 4 ;
- la figure 7 est une vue de côté droit en coupe longitudinale d'une unité individuelle selon un second mode de réalisation de la présente invention ;
- la figure 8 est une vue de face en demi-coupe transversale de l'unité individuelle de la figure 7 ;
- la figure 9 est une vue de côté gauche en coupe longitudinale de l'unité individuelle de la figure 7 ;
- la figure 10 est une vue de côté droit en coupe longitudinale d'un chariot déplaçable de distribution de repas selon un mode de réalisation de la présente invention ; et
- la figure 11 est une vue de côté gauche en coupe longitudinale d'une unité individuelle selon un troisième mode de réalisation de la présente invention.

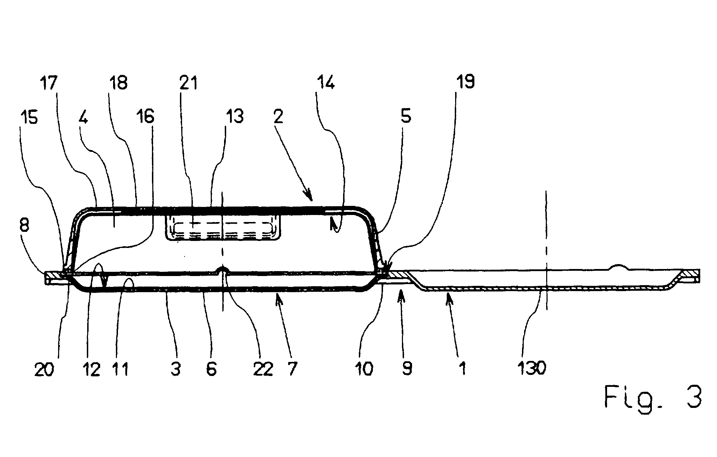

Comme le représente la figure 3, les aliments provenant d'une cuisine collective peuvent être préparés sur un plateau 1 muni d'une cloche 2 supérieure amovible pouvant être posée sur une première partie 3 au moins du plateau pour délimiter, entre le plateau 1 et la cloche 2, un espace intérieur 4 entouré d'une paroi périphérique 5 et pouvant contenir des aliments à mettre à température par échauffement.

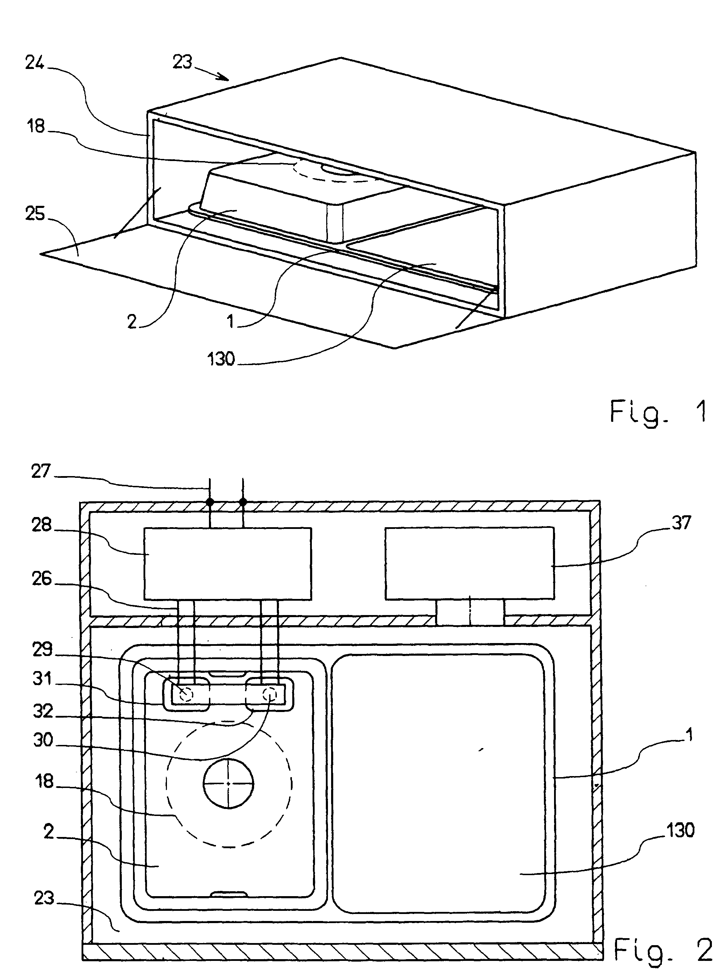

Dans le mode de réalisation illustré sur les figures 1 à 6, le corps de plateau 1 comprend une structure de base 6 en matière plastique formant une surface externe inférieure 7 et des bords 8. La structure de base 6, dans le mode de réalisation représenté, comporte deux parties qui sont chacune en forme générale de cuvette, à savoir la première partie 3 destinée à recevoir la cloche 2 recouvrant les aliments devant être réchauffés, et une seconde partie 130 destinée à supporter les aliments devant rester froids.

Les deux parties 3 et 130 en cuvette du corps de plateau 1 sont reliées par une zone intermédiaire 9 relevée munie d'éléments raidisseurs 10 tels que des nervures.

La structure de base 6 du corps de plateau comporte, sur la première partie 3 recevant la cloche 2, une couche supérieure de diffusion 11 en métal bon conducteur de la chaleur, par exemple en aluminium, rapportée sur la structure de base 6. La couche supérieure de diffusion 11 peut avantageusement être recouverte, sur au moins sa face apparente 12, d'une couche de polytétrafluoroéthylène noir ou d'émail noir, favorisant le rayonnement thermique vers les aliments.

Dans le mode de réalisation représenté, la seconde partie 130 en cuvette du corps de plateau destinée à recevoir les éléments devant rester froids est dépourvue de couche supérieure métallique.

Comme on le voit sur cette même figure 3, la cloche 2 comprend une enveloppe externe 13 en matière plastique thermiquement isolante solidaire d'une couche inférieure de diffusion 14 en métal bon conducteur de la chaleur, par exemple en aluminium, à face apparente pouvant avantageusement être recouverte de polytétrafluoroéthylène noir ou d'émail noir.

De préférence, l'enveloppe externe 13 et la couche de diffusion 14 de la cloche 2 sont solidarisées selon leurs bords périphériques inférieurs respectifs 15 et 16, en laissant une lame d'air 17 entre l'enveloppe externe 13 et la couche de diffusion 14 dans la partie centrale de cloche 2. La lame d'air 17 participe à l'isolation thermique de la cloche, évitant la diffusion thermique vers l'extérieur et l'échauffement excessif de l'enveloppe externe 13 de la cloche 2, et favorisant l'échauffement de la couche de diffusion 14.

Dans le mode de réalisation illustré sur la figure 3, une plaque chauffante 18 intermédiaire est placée dans la zone centrale de paroi supérieure de cloche 2, par exemple engagée entre l'enveloppe extérieure 13 et la couche inférieure de diffusion 14, fixée sur la face supérieure de couche de diffusion 14 pour lui transmettre la chaleur qu'elle dégage. La plaque chauffante 18 peut par exemple être un disque fixé sur la face supérieure de couche inférieure de diffusion 14, ladite couche inférieure de diffusion 14 étant généralement plane dans la zone centrale de la cloche 2.

En alternative, on peut concevoir de disposer une plaque chauffante annulaire en périphérie de la cloche 2, c'est à dire fixée à la face périphérique latérale de la couche inférieure 14 de diffusion.

La structure de base 6 du corps de plateau 1 comporte un rebord périphérique supérieur plat 8, et la couche supérieure de diffusion 11 du plateau comporte elle-même un rebord périphérique supérieur plat 19 apparent. Ainsi, le rebord périphérique supérieur 19 est accessible pour supporter lui-même le bord inférieur de la cloche 2.

Simultanément, dans la cloche 2, le bord périphérique inférieur 16 de la couche inférieure de diffusion 14 présente une facette périphérique inférieure plane 20, venant en appui sur le bord périphérique supérieur 19. Ainsi, la couche supérieure de diffusion 11 du plateau 1 vient au contact de la couche inférieure de diffusion 14 de la cloche 2 en périphérie de l'espace intérieur 4. Ce contact permet la transmission de chaleur, par conduction thermique, depuis la plaque chauffante 18 tout autour des aliments à réchauffer.

Des déformations concaves telles que la déformation 21 peuvent être ménagées sur la face latérale de la cloche 2, pour constituer des poignées de préhension.

On peut avantageusement prévoir au moins deux orifices ménagés en des zones opposées de partie inférieure de paroi périphérique 5 entourant l'espace intérieur 4. Par exemple, dans le mode de réalisation illustré sur la figure 3, on distingue l'un des deux orifices 22, sous forme d'une encoche ou d'une déformation ménagée dans le bord de contact de la cloche 2, ou bord destiné à reposer sur le corps de plateau 1. Les encoches ou déformations illustrées ont une section demi-circulaires dont le rayon est d'environ 4 mm. En alternative, on peut prévoir des encoches ou déformations similaires ménagées dans le bord du corps de plateau 1 sur lequel vient s'appuyer un bord inférieur plan de la cloche 2.

En se référant maintenant aux figures 1 et 2, on a représenté un dispositif selon un premier mode de réalisation simplifié de l'invention, comprenant une enceinte 23 individuelle fermée délimitée par une paroi périphérique 24 thermiquement isolante munie d'une porte d'accès 25 et dimensionnée pour recevoir et contenir au moins un plateau repas 1 muni de sa cloche 2. Comme illustré sur la figure 2, un générateur de froid 37 maintient l'enceinte 23 à une température de réfrigération appropriée assurant la conservation des aliments sur le plateau repas 1. Des moyens de transmission 26 permettent de transmettre, à la plaque chauffante 18, l'énergie provenant d'une source d'énergie extérieure telle qu'une ligne d'alimentation électrique 27 munie de moyens de commande 28. Les moyens de commande 28 sont adaptés pour assurer l'alimentation de la source de chaleur 18, et ainsi un échauffement programmé de l'espace intérieur 4 du plateau 1 et des aliments qu'il contient, pendant une durée appropriée avant la période de consommation.

La plaque chauffante 18 constitue une source de chaleur logée en face intérieure de la cloche 2 ou du plateau 1, et adaptée pour échauffer sélectivement l'espace intérieur 4 entre la cloche 2 et le plateau 1 et les aliments qu'il contient.

Dans un premier mode de réalisation, la plaque chauffante 18 est en un matériau réchauffable par induction magnétique, en contact avec la couche de diffusion 14 de la cloche 2. Dans ce cas, l'enceinte 23 est munie d'un générateur de champ d'induction magnétique disposé à proximité de la face supérieure de la cloche 2, et commandé par le dispositif de commande 28.

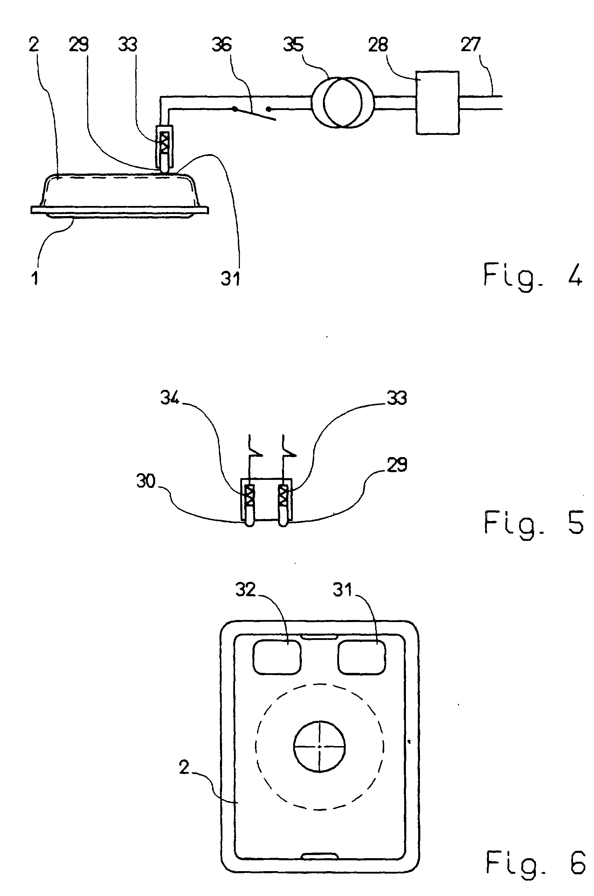

Dans un second mode de réalisation, la plaque chauffante 18 est une résistance électrique qu'il faut connecter électriquement à la source extérieure d'énergie électrique 27 par l'intermédiaire du dispositif de commande 28. Dans ce cas, l'enceinte 23 comprend deux bornes de contact 29 et 30, illustrées plus en détail sur les figures 4 et 5, et agencées pour venir en contact de deux bornes externes de cloche 31 et 32 placées de préférence en face supérieure de la cloche 2. Les bornes externes de cloche 31 et 32 peuvent être constituées de deux portions de surface supérieure de cloche en matériau conducteur de l'électricité isolées l'une de l'autre et connectées électriquement aux deux bornes de la plaque chauffante 18. Dans la réalisation illustrée sur les figures 4 et 5, les bornes de contact 29 et 30 peuvent être constituées d'ergots métalliques mobiles en coulissement vertical dans des logements correspondants et sollicités vers le bas par des ressorts 33 et 34 pour venir en appui élastique sur les bornes externes de cloche 31 et 32 respectives.

L'enceinte 23 est dimensionnée et conformée intérieurement pour recevoir le plateau 1 et le guider jusqu'en une position d'engagement complet, comme illustré sur la figure 1. Dans cette position d'engagement complet, le plateau 1 est supporté par l'enceinte 23, et les bornes externes 31 et 32 de la cloche 2 sont au contact des bornes de contact correspondantes 29 et 30 de l'enceinte 23, pour assurer la connexion électrique de la plaque chauffante 18. Le guidage du plateau 1 dans l'enceinte 23 peut être assuré par des glissières latérales, des tablettes horizontales, ou tout autre moyen pour conférer au plateau la position d'engagement complet.

Comme représenté sur la figure 4, on peut interposer un transformateur électrique 35 entre le dispositif de commande 28 et les bornes de contact 29 et 30, de façon à alimenter les bornes de contact 29 et 30 en 24 volts. En outre, un commutateur 36 est connecté en série entre l'une au moins des bornes de contact 29 et 30 et la source d'énergie électrique extérieure 27, et est piloté par un capteur sensible à la position de la porte 25 de façon que le commutateur 36 soit à l'état ouvert lorsque la porte 25 est ouverte et soit à l'état fermé lorsque la porte 25 est fermée. Ainsi, lorsque la porte 25 est ouverte ou entrouverte, l'alimentation électrique des bornes de contact 29 et 30 est interrompue.

Dans le mode de réalisation illustré sur la figure 1, l'enceinte 23 est conformée pour recevoir et supporter un seul plateau repas 1. En alternative, l'enceinte 23 peut être conformée pour recevoir et supporter deux plateaux repas. Dans les deux cas, l'enceinte 23 constitue une unité individuelle de réfrigération et de remise à température d'aliments, unité qui peut par exemple être placée à proximité d'un lit dans une chambre d'hôpital.

Le dispositif de commande 28 est adapté pour assurer l'alimentation de la plaque chauffante 18 pendant une durée déterminée avant la période de consommation. Par exemple, l'utilisateur peut programmer l'heure de début de chauffe, la durée de chauffe, et éventuellement la puissance de chauffe. En alternative, le dispositif de commande 28 peut être télécommandé.

Après consommation, l'utilisateur peut remettre le plateau repas dans l'enceinte 23, qui maintient l'ensemble à température de réfrigération.

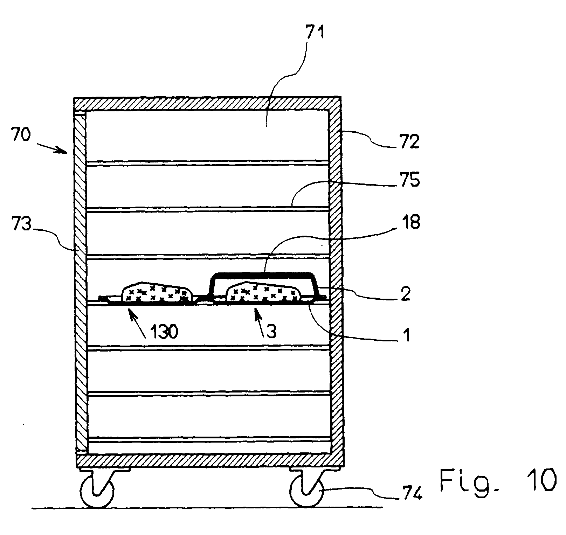

Le dispositif selon l'invention peut avantageusement comprendre également des moyens de transport tels qu'un chariot 70 illustré sur la figure 10, ayant une enceinte 71 conformée pour contenir un nombre approprié de plateaux individuels tels que le plateau 1 portant des repas, et entourée d'une paroi périphérique 72 thermiquement isolante munie d'une porte 73 de chargement et de déchargement.

Dans ce mode de réalisation illustré sur la figure 10, le moyen de transport est un chariot 70 déplaçable manuellement, constitué d'un bâti à roulettes 74 supportant la paroi périphérique 72 thermiquement isolante qui entoure une enceinte 71 non compartimentée ayant des glissières latérales horizontales telles que la glissière 75 pour supporter une pile de plateaux individuels tels que le plateau 1. Ainsi, le chariot 70 a une structure particulièrement simple et peu onéreuse, et est adapté pour maintenir la température froide des plateaux et des repas qu'il contient pendant le trajet entre la cuisine collective où les plateaux sont conditionnés et les lieux de consommation où les plateaux sont retirés du chariot 70 pour être introduits dans des unités individuelles locales directement accessibles par l'utilisateur. La capacité d'isolation thermique de la paroi périphérique 72 est choisie de façon à maintenir les aliments portés par les plateaux repas contenus dans le chariot 70 à une température de 3°C pendant une durée déterminée, par exemple une durée d'une heure.

Dans le chariot 70, on peut prévoir que les plateaux individuels 1 sont engagés dans le sens de leur longueur, comme illustré sur la figure 10. En alternative, on pourrait prévoir des chariots 70 dans lesquels les plateaux individuels 1 sont introduits dans le sens de leur largeur.

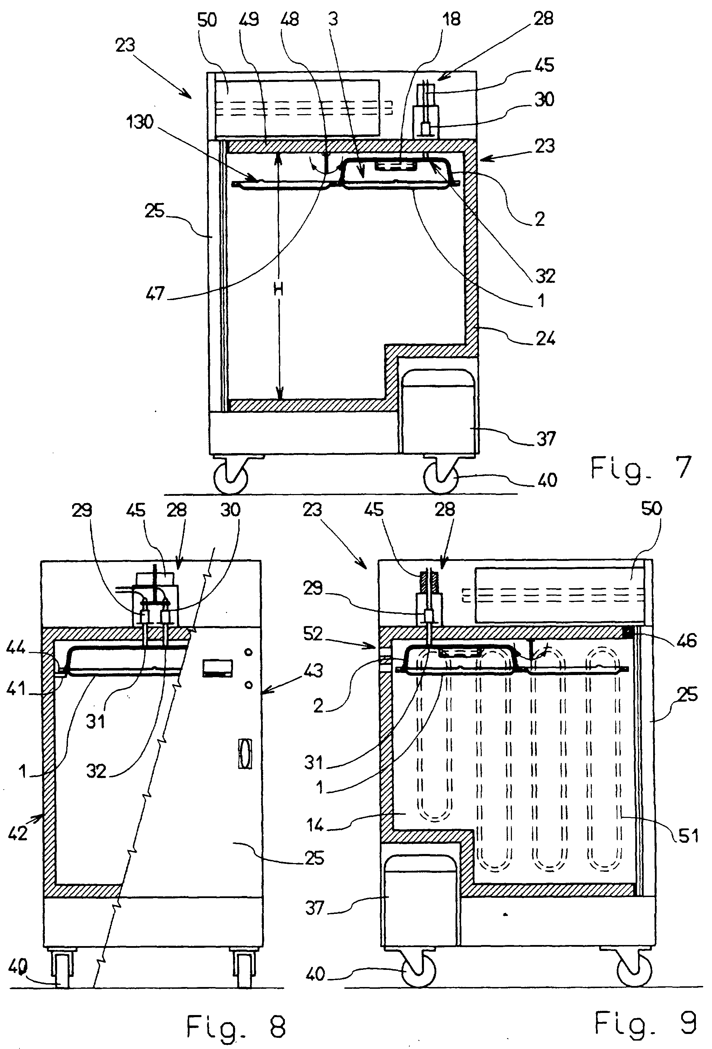

Dans la réalisation illustrée sur les figures 7 à 9, l'unité individuelle de réfrigération et de remise à température d'aliments 23 est portée par un bâti à roulettes 40, et présente une forme générale parallélépipédique de dimensions appropriées pour constituer une table de nuit placée à côté d'un lit d'hôpital. Dans ce cas, l'unité individuelle 23 peut ne contenir qu'un seul plateau individuel 1. On peut toutefois prévoir une unité individuelle 23 permettant de contenir deux plateaux individuels 1 placés l'un au dessus de l'autre, pour deux repas successifs.

Dans cette réalisation, l'enceinte de l'unité individuelle 23 est elle-même parallélépipédique, avec sa porte 25 fermant un petit côté, et avec des glissières latérales 41 prévues en face intérieure des grands côtés, les grands côtés 42 et 43 étant espacés l'un de l'autre d'une largeur adaptée pour l'engagement en long du ou des plateaux individuels 1 qui viennent en appui sur les glissières 41 selon leurs grands bords latéraux tels que le bord 44.

De préférence, l'enceinte de l'unité individuelle 23 a une hauteur intérieure H supérieure à la hauteur du ou des plateaux individuels 1 munis de cloches 2, et les glissières latérales 41 de maintien de plateau sont prévues en partie haute de l'enceinte, pour laisser un espace inférieur d'enceinte disponible et conformé pour contenir d'autres matières à réfrigérer telles que des boissons.

Comme dans le mode de réalisation précédent, la source de chaleur 18 est une résistance électrique connectée électriquement à deux bornes externes 31 et 32 de la cloche 2, et les moyens de transmission d'énergie 28 comprennent deux bornes de contact 29 et 30 correspondantes agencées pour venir en contact électrique des bornes externes 31 et 32 de cloche 2 pour assurer la connexion électrique de la résistance 18 à une source extérieure d'énergie électrique telle que le réseau de distribution d'énergie électrique lorsque le plateau individuel 1 est supporté dans l'enceinte de l'unité individuelle 23.

Dans cette variante, les bornes de contact 29 et 30 sont déplaçables entre une position déployée dans laquelle elles viennent au contact des bornes externes 31 et 32 de la cloche 2, et une position escamotée dans laquelle elles sont en retrait à l'extérieur de l'espace intérieur de l'enceinte. Des moyens de rappel élastiques, tels qu'un ressort non illustré sur les figures, rappellent les bornes de contact 29 et 30 vers la position escamotée. Un électro-aimant 45 permet, lorsqu'il est alimenté en simultanéité avec les bornes de contact 29 et 30, d'amener lesdites bornes de contact 29 et 30 en position déployée pour assurer la connexion électrique de la résistance 18.

Par mesure de sécurité, l'électro-aimant 45 est alimenté en simultanéité avec les bornes de contact 29 et 30, pour amener les bornes de contact 29 et 30 en position déployée seulement lorsque celles-ci sont sous tension.

De préférence, l'unité individuelle comprend en outre un capteur 46 de position de la porte 25, produisant l'inhibition d'alimentation des bornes de contact 29 et 30 lorsque la porte 25 est ouverte. De plus, lorsque la porte 25 est ouverte, le capteur 46 de position de la porte 25 produit l'inhibition d'alimentation de l'électro-aimant 45, de sorte que l'ouverture de la porte 25 provoque automatiquement le retrait des bornes de contact 29 et 30 hors de portée de l'utilisateur, assurant une sécurité accentuée lors d'une opération de nettoyage de l'intérieur de l'enceinte, ou lors de toute intervention de l'utilisateur à l'intérieur de l'enceinte.

De préférence, les moyens de transmission d'énergie tels que les bornes de contact 29 et 30 sont disposés dans la partie de l'enceinte la plus éloignée de la porte 25, cette partie la plus éloignée constituant la zone de réchauffage des aliments, permettant de réchauffer la partie de repas destinée à être consommée chaude. De la sorte, en ouvrant la porte 25, le consommateur saisit le plateau individuel 1 par sa zone froide.

De plus, pour diminuer le risque de réchauffement de la portion 130 de repas destinée à être consommée froide, on peut prévoir un volet supérieur transversal 47 monté pivotant librement autour d'un axe d'articulation supérieur transversal 48 placé en position intermédiaire de la paroi supérieure 49 d'enceinte. Le volet supérieur transversal 47 définit une paroi de séparation mobile escamotable qui est repoussée par la cloche 2 lors de l'introduction et de l'extraction du plateau individuel 1. Le volet supérieur transversal 47 isole thermiquement la zone de réchauffage par rapport à la zone destinée à rester froide.

Dans la réalisation illustrée sur les figures 7 à 9, l'unité individuelle 23 comporte en outre une partie supérieure munie d'un tiroir 50, occupant en partie l'espace au niveau de l'électro-aimant 45 et des bornes de contact rétractables 29 et 30. Le générateur de froid 37 peut avantageusement être disposé en position basse, et alimenter un serpentin diffuseur de froid 51 réparti dans l'un des grands côtés au moins de la paroi périphérique 24.

Sur la figure 9, on a en outre représenté une turbine d'extraction d'air chaud 52, disposée en partie supérieure de l'enceinte dans la paroi postérieure, pour extraire l'air chaud et la vapeur résultant de l'échauffement des aliments notamment en fin d'étape de réchauffement. La turbine 52 peut être alimentée en fin d'étape d'échauffement.

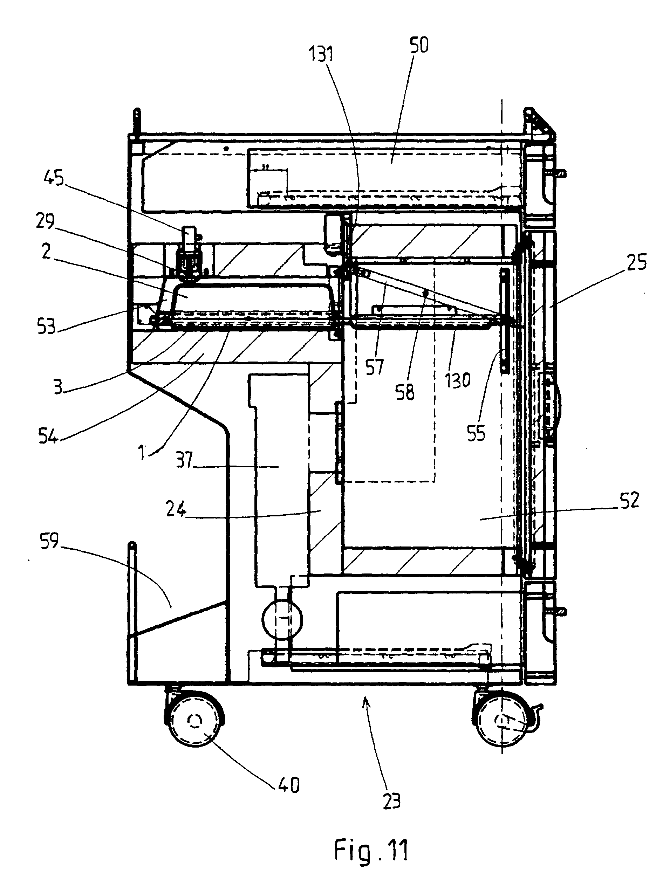

La figure 11 illustre un autre mode de réalisation de l'unité individuelle de réfrigération et de remise à température de repas 23 selon la présente invention. Ce troisième mode de réalisation reprend sensiblement les caractéristiques du second mode de réalisation illustré sur les figures 7 à 9. Pour éviter les répétitions, la figure 11 reprend les mêmes références numériques pour désigner les mêmes éléments correspondant au mode de réalisation des figures 7 à 9.

On retrouve ainsi une unité individuelle 23 de forme générale parallélépipédique montée sur des roues 40, avec une porte 25, un tiroir 50, adaptée pour contenir un plateau 1 et une cloche 2, avec un électro-aimant 45 pour déplacer des bornes de contact telles que la borne 29, et avec un générateur de froid 37.

Une première particularité de ce troisième mode de réalisation est dans la disposition de l'espace intérieur. La partie réfrigérée de l'unité individuelle 23 comprend une partie antérieure 52, occupant toute la hauteur derrière la porte 25, avec une portion supérieure pour recevoir la partie froide 130 du plateau 1, et avec une zone inférieure constituant un compartiment réfrigéré pour recevoir des boissons ou autres produits à conserver au froid. La moitié postérieure de l'unité individuelle 23 comporte une portion supérieure réfrigérée 53 conformée pour recevoir la première partie 3 du plateau 1 et la cloche 2, la portion supérieure réfrigérée 53 étant entourée d'une paroi thermiquement isolante 54. Le générateur de froid 37 est disposé au dessous de la portion supérieure réfrigérée 53, dans la moitié postérieure de l'unité individuelle 23. On met à profit l'encombrement relativement réduit du générateur de froid 37 pour ménager un casier postérieur 59, ouvert vers l'arrière et le dessus, et adapté pour servir de rangement pour divers objets tels qu'un bassin pour lit d'hôpital.

Une seconde particularité de ce mode de réalisation de la figure 11 réside dans des moyens pour isoler sélectivement la partie chaude 3 et la partie froide 130 du plateau 1, et des moyens de verrouillage pour interdire l'extraction du plateau 1 avant la fin de période de remise à température. Dans le mode de réalisation illustré, ces moyens comprennent un volet antérieur 55, mobile verticalement et disposé juste derrière la porte 25 dans la zone supérieure de la partie antérieure 52 d'enceinte, pour autoriser ou interdire le passage du plateau 1. En position abaissée, le volet antérieur 55 autorise le passage du plateau 1 alors que, en position relevée, le volet 55 interdit à l'utilisateur de prendre le plateau 1 pour le sortir de l'unité individuelle 23.

Le volet antérieur 55 est monté sur un bras 57 articulé selon un axe 58 transversal dont l'autre extrémité porte un volet supérieur 131 escamotable, déplaçable entre une position relevée ou ouverte dans laquelle il permet la translation du plateau et des aliments pour l'introduction ou l'extraction, et une position fermée ou abaissée dans laquelle il s'interpose entre la première partie 3 de plateau portant les aliments destinés à être consommés chauds et la seconde partie 130 de plateau portant les aliments destinés à être consommés froids.

On peut prévoir des moyens de motorisation pour déplacer le volet antérieur 55 et le volet supérieur 31 escamotable entre les positions ouverte et fermée, et pour les verrouiller en position fermée.

Dans les modes de réalisation qui ont été explicitement décrits, la cloche 2 est un élément amovible distinct, posé sur la première partie 3 du plateau 1.

En alternative, on peut prévoir une cloche 2 formant un élément solidaire de l'enceinte de l'unité individuelle 23, avec des moyens d'entraînement assurant le déplacement relatif vertical de la cloche 2 et du plateau 1 l'un vers ou à l'écart de l'autre pour la fermeture et l'ouverture du compartiment enfermant les aliments destinés à être consommés chauds. Dans ce cas, avant la période de remise à température, la cloche 2 reste relevée, autorisant le passage d'air froid dans tout l'intérieur de l'enceinte autour des aliments ; pendant la période de remise à température, la cloche 2 est abaissée pour venir en contact du plateau 1. Elle est relevée juste avant le retrait du plateau pour la consommation par l'utilisateur.

Dans tous les cas, des capteurs de température et des moyens d'enregistrement peuvent être prévus dans l'unité individuelle 23, pour mémoriser l'évolution de la température des aliments disposés sur le plateau 1. On peut ainsi surveiller le respect des conditions d'hygiène, de façon simple et particulièrement fiable.

La présente invention n'est pas limitée aux modes de réalisation qui ont été explicitement décrits, mais elle en inclut les diverses variantes et généralisations contenues dans le domaine des revendications ci-après.

## Revendications

1. Dispositif pour la conservation et le conditionnement d'aliments préparés sur des plateaux (1) transportables comportant une première partie (3) adaptée pour être recouverte d'une cloche (2) isolante amovible pour les aliments destinés à être consommés chauds, comprenant :
- une enceinte (23) fermée, délimitée par une paroi périphérique (24) thermiquement isolante munie d'une porte d'accès (25) et conformée pour contenir et supporter les plateaux (1) avec leur cloche (2) isolante,
- un générateur de froid (37) pour maintenir l'enceinte (23) à une température de réfrigération appropriée assurant la conservation des aliments,
- au moins un plateau (1) transportable, dont la première partie (3) est recouverte d'une cloche (2) isolante amovible pour les aliments destinés à être consommés chauds, et dont la seconde partie (130) n'est pas recouverte par la cloche (2) isolante pour supporter les aliments devant rester froids,
- une source de chaleur (18), logée en face intérieure de la cloche (2) et/ou de la première partie (3) du plateau (1) et adaptée pour échauffer sélectivement l'espace intérieur (4) entre la cloche (2) et le plateau (1) et les aliments qu'il contient,
- des moyens de transmission (26) pour transmettre à la source de chaleur (18) l'énergie provenant d'une source d'énergie extérieure (27) munie de moyens de commande (28), pour assurer un échauffement programmé dudit espace intérieur (4) et des aliments qu'il contient peu avant la période de consommation,
**caractérisé en ce que** l'enceinte (23) est dimensionnée et conformée pour contenir et supporter seulement un ou deux plateaux repas (1) avec leur cloche (2) isolante, constituant une unité individuelle de réfrigération et de remise à température de repas placée à proximité immédiate du consommateur pour être directement accessible par lui au moment de la prise de repas.

2. Dispositif selon la revendication 1, **caractérisé en ce que** l'unité individuelle (23) est généralement parallélépipédique, avec une porte d'accès (25) fermant un petit côté, avec des glissières latérales (41) prévues en face intérieure des grands côtés (42, 43), les grands côtés (42, 43) étant espacés d'une largeur appropriée pour l'engagement en long du ou des plateaux individuels (1) qui viennent en appui par leur grands bords latéraux (44) sur les glissières latérales (41).

3. Dispositif selon l'une des revendications 1 ou 2, **caractérisé en ce que** l'unité individuelle (23) a une hauteur intérieure (H) supérieure à la hauteur du ou des plateaux individuels (1) munis de cloches (2), et les glissières latérales (41) de maintien de plateau sont prévues en partie haute de l'enceinte, pour laisser un espace inférieur d'enceinte disponible et conformé pour contenir d'autres matières à réfrigérer telles que des boissons.

4. Dispositif selon l'une quelconque des revendications 1 à 3, **caractérisé en ce que** l'unité individuelle (23) est portée par un bâti à roulettes (40) et présente une forme générale parallélépipédique de dimensions appropriées pour constituer une table de nuit placée à côté d'un lit d'hôpital.

5. Dispositif selon l'une quelconque des revendications 1 à 4, **caractérisé en ce que** :
- la cloche (2) comprend une enveloppe externe (13) thermiquement isolante et une couche inférieure de diffusion (14), métallique conductrice de la chaleur,
- le plateau (1) comprend une structure de base (3) thermiquement isolante formant la surface externe inférieure et périphérique, et recouverte, sur au moins la partie recevant la cloche (2), d'une couche supérieure de diffusion (11) métallique conductrice de la chaleur,
- la couche supérieure de diffusion (11) du plateau vient en contact de la couche inférieure de diffusion (14) de la cloche (2) en périphérie de l'espace intérieur (4).

6. Dispositif selon l'une quelconque des revendications 1 à 5, **caractérisé en ce que** les couches de diffusion (11, 14) sont recouvertes, sur leur face apparente, avec une couche de polytétrafluoroéthylène noir ou d'émail noir.

7. Dispositif selon l'une quelconque des revendications 1 à 6, **caractérisé en ce qu'**au moins deux orifices (22) sont ménagés en des zones opposées de partie inférieure de paroi périphérique (5) entourant l'espace intérieur (4).

8. Dispositif selon la revendication 7, **caractérisé en ce que** les orifices (22) sont des encoches ou des déformations ménagées dans le bord de contact de la cloche (2) et du corps de plateau (1).

9. Dispositif selon l'une quelconque des revendications 1 à 8, **caractérisé en ce que** la source de chaleur (18) est logée en face intérieure de la cloche (2).

10. Dispositif selon la revendication 9, **caractérisé en ce que** la source de chaleur (18) est une résistance électrique connectée électriquement à deux bornes externes (31, 32) de la cloche (2), l'enceinte (23) comprenant des bornes de contact (29, 30) correspondantes agencées pour venir en contact des bornes externes de cloche (31, 32) pour assurer la connexion électrique de la résistance à une source extérieure d'énergie électrique (27) lorsque le plateau (1) est supporté dans l'enceinte (23).

11. Dispositif selon la revendication 10, **caractérisé en ce que** les bornes de contact (29, 30) sont déplaçables entre une position déployée dans laquelle elles viennent au contact des bornes externes (31, 32) de la cloche (2), et une position escamotée dans laquelle elles sont en retrait à l'extérieur de l'espace intérieur de l'enceinte, avec des moyens de rappel élastiques pour les rappeler vers la position escamotée, et avec un électro-aimant (45) alimenté en simultanéité avec les bornes de contact (29, 30) pour amener les bornes de contact (29, 30) en position déployée.

12. Dispositif selon l'une des revendications 10 ou 11, **caractérisé en ce qu'**il comprend un capteur (46) de position de porte (25) produisant l'inhibition d'alimentation des bornes de contact (29, 30) lorsque la porte (25) est ouverte.

13. Dispositif selon l'une quelconque des revendications 1 à 12, **caractérisé en ce que** les moyens de transmission d'énergie (29, 30) sont disposés dans la partie de l'enceinte la plus éloignée de la porte (25), qui constitue la zone de réchauffage des aliments.

14. Dispositif selon la revendication 13, **caractérisé en ce qu'**il comprend un volet supérieur transversal (131) escamotable, déplaçable entre une position ouverte dans laquelle il permet la translation du plateau (1) et des aliments pour l'introduction ou l'extraction, et une position fermée dans laquelle il s'interpose entre la première partie (3) de plateau portant les aliments destinés à être consommés chauds et une seconde partie (130) de plateau portant les aliments destinés à être consommés froids.

15. Dispositif selon l'une quelconque des revendications 1 à 14, **caractérisé en ce qu'**il comprend des moyens de verrouillage (55) pour interdire l'extraction du plateau (1) repas avant la fin de période de remise à température.

16. Dispositif selon l'une quelconque des revendications 1 à 15, **caractérisé en ce qu'**il comprend des moyens d'extraction d'air (52) pour extraire l'air dans la zone d'enceinte contenant la première partie (3) de plateau repas, à l'extérieur de la cloche (2).

17. Dispositif selon l'une quelconque des revendications 1 à 16, **caractérisé en ce que** la cloche (2) est un élément amovible distinct, posé sur la première partie (3) du plateau (1).

18. Dispositif selon l'une quelconque des revendications 1 à 16, **caractérisé en ce que** la cloche (2) est un élément solidaire de l'enceinte de l'unité individuelle (23), et des moyens d'entraînement assurent le déplacement relatif vertical de la cloche (2) ou du plateau (1) l'un vers ou à l'écart de l'autre pour la fermeture et l'ouverture du compartiment enfermant les aliments destinés à être consommés chauds.

19. Dispositif selon l'une quelconque des revendications 1 à 18, **caractérisé en ce qu'**il comprend :
- une pluralité de plateaux individuels (1) ayant une première partie (3) conformée pour porter une portion de repas destinée à être consommée chaude et une seconde partie (130) conformée pour porter une portion de repas destinée à être consommée froide, avec une cloche (2) amovible thermiquement isolante adaptable sur la première partie (3) de plateau pour recouvrir la portion de repas destinée à être consommée chaude,
- des moyens de transport (70) ayant une enceinte (71) conformée pour contenir un nombre approprié de plateaux individuels (1), portant les repas et entourée d'une paroi (72) thermiquement isolante munie d'une porte (73) de chargement et de déchargement,
- une pluralité desdites unités individuelles de réfrigération et de remise à température de repas (23).

20. Dispositif selon la revendication 19, **caractérisé en ce que** les moyens de transport comprennent au moins un chariot (70) déplaçable manuellement, constitué d'un bâti à roulettes (74) supportant la paroi périphérique (72) thermiquement isolante entourant une enceinte (71) non compartimentée ayant des glissières latérales (75) pour supporter une pile de plateaux individuels (1).

21. Procédé pour la distribution collective de repas, dans lequel :
a) on prépare les repas et on les dispose sur des plateaux individuels (1) en cuisine collective, les plateaux individuels (1) ayant une première partie (3) de plateau individuel portant la portion de repas destinée à être consommée chaude, les plateaux individuels (1) ayant une seconde partie (130) de plateau individuel portant la portion de repas destinée à être consommée froide, ladite première partie (3) de plateau individuel pouvant recevoir une cloche (2) thermiquement isolante,
b) on transporte lesdits plateaux individuels (1) garnis de repas dans l'enceinte thermiquement isolée (71) d'un moyen de transport isotherme (70) du dispositif selon l'une des revendications 19 ou 20 jusque sur les lieux de consommation,
c) on répartit lesdits plateaux individuels (1) garnis de repas dans des unités individuelles (23) de réfrigération et de remise à température de repas du dispositif selon l'une quelconque des revendications 1 à 19 prévues dans chaque lieu de consommation et directement accessibles par le consommateur,
d) on réchauffe sélectivement les portions de repas destinées à être consommées chaudes sur les plateaux individuels (1) placés dans les unités individuelles (23) en utilisant des sources de chaleur (18) individuelles réchauffant les aliments placés sous les cloches (2).

## Claims

1. Device for storing and packaging prepared foods on transportable trays (1) having a first part (3) adapted to be covered by a removable insulative cloche (2) for foods intended to be eaten hot, comprising:
- a closed enclosure (23), delimited by a thermally insulative peripheral wall (24) having an access door (25) and shaped to contain and to support the trays (1) with their insulative cloche (2),
- a refrigerator unit (37) adapted to maintain the enclosure (23) at an appropriate refrigeration temperature for storage of the food,
- at least a transportable tray (1), the first part (3) of which is covered by a removable insulative cloche (2) for foods intended to be heaten hot, and the second part (130) is not covered by the insulative cloche (2) to carry the foods intended to remain cold,
- a heat source (18), housed in the inside face of the cloche (2) and/or the first part (3) of the tray (1) and adapted selectively to heat the interior space (4) between the cloche (2) and the tray (1) and the foods that it contains,
- transmission means (26) for transmitting to the heat source (18) energy from an external energy supply (27) provided with control means (28) to assure programmed heating of said interior space (4) and the foods that it contains shortly before the food is eaten,
**characterized in that** the dimensions and the shape of the enclosure (23) are such that it can contain and support only one or two meal trays (1) with their insulative cloche (2), constituting an individual meal refrigering and heating unit placed in the immediate proximity of the user so as to be directly accessible by the user at meal times.

2. Device according to claim 1, **characterized in that** the individual unit (23) is generally parallelepiped shape with an access door (25) closing one smaller side, and with lateral slides (41) on the inside face of the larger sides (42, 43), the distance between the larger sides (42, 43) being suitable for lengthwise insertion of the individual tray or trays (1), lateral wide rims (44) of which rest on the lateral slides (41).

3. Device according to claim 1 or 2, **characterized in that** the individual unit (23) has an inside height (H) greater than the height of the individual tray or trays (1) fitted with cloches (2), and the tray support lateral slides (41) are in an upper part of the enclosure to leave a lower enclosure space available and shaped to contain other items to be refrigerated such as drinks.

4. Device according to claims 1 or 3, **characterized in that** the individual unit (23) is carried by a frame (40) on castors and is generally parallelepiped shape with appropriate dimensions to constitute a bedside table placed bedside a hospital bed.

5. Device according to claims 1 or 4, **characterized in that** :
- the cloche (2) comprises a thermally insulative external layer (13) and a metallic bottom diffusion layer (14) that conducts heat,
- the tray (1) comprises a thermally insulative basic structure (3) forming the peripheral and bottom outside surface and covered, at least in the part receiving the cloche (2) with a thermally conductive metallic top diffusion layer (11),
- the top diffusion layer (11) of the tray comes into contact with the bottom diffusion layer (14) of the cloche (2) at the periphery of the interior space (4).

6. Device according to any one of claims 1 to 5, **characterized in that** the diffusion layers (11, 14) are covered, on their exposed face, with a layer of black tetrafluoroethylene or black enamel.

7. Device according to any one of claims 1 to 6, **characterized in that** at least two orifices (22) are provided in opposed areas of the lower part of the peripheral wall (5) surrounding the interior space (4).

8. Device according to claim 7, **characterized in that** the orifices (22) are notches or deformations in the contacting edge of the cloche (2) and the tray body (1).

9. Device according to any one of claims 1 to 8, **characterized in that** the heat source (18) is housed in the bottom face of the cloche (2).

10. Device according to claim 9, **characterized in that** the heat source (18) is an electrical element electrically connected to two external terminals (31, 32) of the cloche (2), the enclosure (23) comprising corresponding contact terminals (29, 30) adapted to come into contact with the external terminals (31, 32) of the cloche to assure the electrical connection of the element to an external electrical power supply (27) when the tray (1) is supported in the enclosure (23).

11. Device according to claim 10, **characterized in that** the contact terminals (29, 30) are moveable between a deployed position in which they come into contact with the external terminals (31, 32) of the cloche (2), and a retracted position in which they are retracted out of the interior space of the enclosure, with spring loading means for spring loading them towards the retracted position, and with an electromagnet (45) energized simultaneously with the contact terminals (29, 30) to move the contact terminals (29, 30) to their deployed position.

12. Device according to claim 10 or 11, **characterized in that** it comprises a sensor (46) for sensing the position of the door (25) and disabling the supply of power to the contact terminals (29, 30) when the door (25) is open.

13. Device according to any one of claims 1 to 12, **characterized in that** the energy transmission means (29, 30) are disposed in the part of the enclosure at the greatest distance from the door (25) which constitutes the food heating area.

14. Device according to claim 13, **characterized in that** it comprises a retractable transverse top flap (131), moveable between an open position in which it allows the tray (1) and the food to be slid in and out, and a closed position in which it is disposed between the first part (3) of the tray carrying the food intended to be eaten hot and a second part (130) of the tray carrying food intended to be eaten cold.

15. Device according to any one of claims 1 to 14, **characterized in that** it comprises locking means (55) to prevent removal of the meal tray (1) before the end of the heating period.

16. Device according to any one of claims 1 to 15, **characterized in that** it comprises air extractor means (52) for extracting the air in the enclosure area containing the first part (3) of the meal tray, outside the cloche (2).

17. Device according to any one of claims 1 to 16, **characterized in that** the cloche (2) is a separate removable part, adapted to be placed on the first part (3) of the tray (1).

18. Device according to any one of claims 1 to 16, **characterized in that** the cloche (2) is a part attached to the enclosure of the individual unit (23), and in that it includes drive means adapted to assure relative vertical movement of the cloche (2) or of the tray (1) towards or away from the other to close and open the compartment containing the food intended to be eaten hot.

19. Device according to any one of claims 1 to 18, **characterized in that** it comprises:
- a plurality of individual trays (1) having a first part (3) shaped to carry a meal portion intended to be eaten hot and a second part (130) shaped to carry a meal portion intended to be eaten cold, with a thermally insulative removable cloche (2) adapted to be fitted over the first part (3) of the tray to cover the meal portion intended to be eaten hot,
- transport means (70) having an enclosure (71) shaped to contain an appropriate number of individual trays (1), carrying the meals and surrounded by a thermally insulative wall (72) provided with a loading and unloading door (73),
- a plurality of said individual meal refrigering and heating units (23).

20. Device according to claim 19, **characterized in that** the transport means comprise at least one manually propelled cart (70), comprising a frame (74) on castors supporting the thermally insulative peripheral wall (72) surrounding an uncompartmented enclosure (71) having lateral slides (75) adapted to support a stack of individual trays (1).

21. Method for institutional distribution of meals, wherein :
a) the meals are prepared and disposed on individual trays (1) in an institutional kitchen, the individual trays (1) having a first individual tray part (3) carrying the meal portion intended to be eaten hot, the individual trays (1) having a second individual tray part (130) carrying the meal portion intended to be eaten cold, said first individual tray part (3) being adapted to receive a thermally insulative cloche (2),
b) said individual trays (1) carrying meals are transported in the thermally insulative enclosure (71) of thermally insulated transport means (70) of the device according to claim 19 or 20 to the place where the meals are to be eaten,
c) said individual trays (1) carrying meals are distributed into individual food refrigering and heating units (23) of the device according to any one of claims 1 to 19 provided in each place where meals are to be eaten and directly accessible to the persons eating the meals,
d) the meal portions intended to be eaten hot are selectively heated on the individual trays (1) placed in the individual units (23) using individual heat sources (18) to heat the food under the cloches (2).

## Patentansprüche

1. Vorrichtung für die Konservierung und die Konditionierung von Nahrungsmitteln auf transportierbaren Tabletts (1), die einen ersten Bereich (3) aufweisen, der zum Abdecken mit einer abnehmbaren Isolierglocke (2) für die Nahrungsmittel angepaßt ist, die für einen warmen Verzehr bestimmt sind, bestehend aus:
- einer geschlossenen Einfassung (23), die von einer thermisch isolierenden Umfangswand (24) begrenzt ist, welche mit einer Zugriffspforte (25) versehen und dafür angepaßt ist, die Tabletts (1) mit ihrer Isolierglocke (2) aufzunehmen,
- einem Kältegenerator (37), um für die Einfassung (23) eine geeignete Kühlungstemperatur aufrechtzuerhalten, welche die Konservierung der Nahrungsmittel sicherstellt,
- wenigstens einem transportierbaren Tablett (1), bei welchem der erste Bereich (3) mit einer abnehmbaren Isolierglocke (2) für die Nahrungsmittel abgedeckt ist, die für einen warmen Verzehr bestimmt sind, und bei welchem der zweite Bereich (130) nicht von der Isolierglocke (2) abgedeckt ist für ein Ablegen der Nahrungsmittel, die kalt bleiben sollen,
- einer Wärmequelle (18), die an der Innenseite der Glocke (2) und/ oder des ersten Bereichs(3) des Tabletts (1) angeordnet und dafür geeignet ist, den Innenraum (4) zwischen der Glocke (2) und dem Tablett (1) und die Nahrungsmittel, die er enthält, wahlweise zu erwärmen,
- Übertragungsmitteln (26), um an die Wärmequelle (18) die Energie zu übertragen, die von einer äußeren Energiequelle (27) herkommt, welche mit Regelmitteln (28) versehen ist, um eine programmierte Erwärmung des besagten Innenraums (4) und der Nahrungsmittel sicherzustellen, die er vor der Periode des Verzehrs enthält,
**dadurch gekennzeichnet, daß** die Einfassung (23) für die Aufnahme und die Abstützung nur von einem oder von zwei Nahrungsmitteltabletts (1) mit ihrer Isolierglocke (2) dimensioniert und angepaßt ist, die eine individuelle Einheit für eine Kühlung und eine wiederholte Temperaturbeaufschlagung des Nahrungsmittels bilden, das in die unmittelbare Nähe des Verbrauchers gebracht ist, um für ihn bei der Nahrungsmittelaufnahme direkt zugänglich zu sein.

2. Vorrichtung nach Anspruch 1, **dadurch gekennzeichnet, daß** die individuelle Einheit (23) generell parallelflächig ist mit einer Zugangspforte (25), die eine kleine Seite verschließt, mit seitlichen Gleitschienen (41), die an der Innenseite der großen Seiten (42, 43) vorgesehen sind, wobei die großen Seiten (42, 43) mit einer Breite voneinander beabstandet sind, die passend ist für einen Längseingriff mit dem oder den einzelnen Tabletts (1), die mit ihren großen seitlichen Rändern (44) auf den seitlichen Gleitschienen (41) zur Auflage kommen.

3. Vorrichtung nach einem der Ansprüche 1 oder 2, **dadurch gekennzeichnet, daß** die individuelle Einheit (23) eine Innenhöhe (H) größer als die Höhe des oder der einzelnen Tabletts (1) aufweist, die mit Glocken (2) versehen sind, und die seitlichen Gleitschienen (41) zum Halten eines Tabletts in dem oberen Bereich der Einfassung vorgesehen sind, um einen unteren Raum der Einfassung zu belassen, der für die Aufnahme von anderen zu kühlenden Materialien, wie bsp. Getränken, verfügbar und angepaßt ist.

4. Vorrichtung nach einem der Ansprüche 1 bis 3, **dadurch gekennzeichnet, daß** die individuelle Einheit (23) von einem Rollengestell (40) getragen ist und eine generell parallelflächige Form darbietet, die für die Ausbildung eines Nachttisches geeignet ist, der an der Seite eines Krankenhausbettes angeordnet wird.

5. Vorrichtung nach einem der Ansprüche 1 bis 4, **dadurch gekennzeichnet, daß**:
- die Glocke (2) eine äußere, thermisch isolierende Umhüllung (13) und einen unteren, metallischen, für Wärme leitfähigen Diffusionsbelag (14) aufweist,
- das Tablett (1) eine thermisch isolierende Basisstruktur (3) aufweist, die eine untere und periphere Außenfläche bildet und wenigstens an dem Bereich, der die Glocke (2) aufnimmt, mit einem oberen, metallischen, für Wärme leitfähigen Diffusionsbelag (11) abgedeckt ist,
- der obere Diffusionsbelag (11) des Tabletts in Berührung kommt mit dem unteren Diffusionsbelag (14) der Glocke (2) an dem Umfang des Innenraumes (4).

6. Vorrichtung nach einem der Ansprüche 1 bis 5, **dadurch gekennzeichnet, daß** die Diffusinnsbeläge (11, 14) auf ihrer sichtbaren Seite mit einem Belag aus schwarzem Polytetrafluorethylen oder schwarzem Email bedeckt sind.

7. Vorrichtung nach einem der Ansprüche 1 bis 6, **dadurch gekennzeichnet, daß** wenigstens zwei Öffnungen (22) an gegenüberliegenden Zonen des unteren Teils der Umfangswand (5) vorgesehen sind, welche den Innenraum (4) umgibt.

8. Vorrichtung nach Anspruch 7, **dadurch gekennzeichnet, daß** die Öffnungen (22) Aussparungen oder Verformungen sind, die in dem Kontaktrand der Glokke (2) und des Körpers des Tabletts (1) vorgesehen sind.

9. Vorrichtung nach einem der Ansprüche 1 bis 8, **dadurch gekennzeichnet, daß** die Wärmequelle (18) an der inneren Vorderseite der Glocke (2) untergebracht ist.

10. Vorrichtung nach Anspruch 9, **dadurch gekennzeichnet, daß** die Wärmequelle (18) ein elektrischer Widerstand ist, der elektrisch mit zwei äußeren Anschlußklemmen (31, 32) der Glocke (2) verbunden ist, wobei die Einfassung (23) entsprechende Kontaktanschlußklemmen (29, 30) aufweist, die angeordnet sind, um mit den äußeren Anschlußklemmen (31, 32) der Glocke in Kontakt zu kommen, damit die elektrische Verbindung des Widerstandes mit einer äußeren elektrischen Energiequelle (27) sichergestellt wird, wenn das Tablett (1) in der Einfassung (23) abgestützt ist.

11. Vorrichtung nach Anspruch 10, **dadurch gekennzeichnet, daß** die Kontaktanschlußklemmen (29, 30) zwischen einer ausgelegten Position, in welcher sie mit den äußeren Anschlußklemmen (31, 32) der Glocke (2) in Kontakt kommen, und einer verborgenen Position veränderbar sind, in welcher sie nach der Außenseite des Innenraumes der Einfassung zurückgezogen sind, mit elastischen Rückholmitteln, um sie in die verborgene Position zurückzuholen, und mit einem Elektromagneten (45), der gleichzeitig mit den Kontaktanschlußklemmen (29, 30) versorgt wird, um die Kontaktanschlußklemmen (29, 30) in die ausgelegte Position zu bringen.

12. Vorrichtung nach einem der Ansprüche 10 oder 11, **dadurch gekennzeichnet, daß** sie einen Positionsfühler (46) der Pforte (25) aufweist, der die Verhinderung einer Versorgung der Kontaktanschlußklemmen (29, 30) erzeugt, wenn die Pforte (25) geöffnet ist.

13. Vorrichtung nach einem der Ansprüche 1 bis 12, **dadurch gekennzeichnet, daß** die Energieübertragungsmittel (29, 30) in dem von der Pforte (25) am weitesten entfernten Teil der Einfassung angeordnet sind, der die Zone der Wiederaufwärmung der Nahrungsmittel bildet.

14. Vorrichtung nach Anspruch 13, **dadurch gekennzeichnet, daß** sie eine obere, quer liegende, einklappbare Verschlußklappe (131) aufweist, die zwischen einer offenen Position, in welcher sie die Verschiebung des Tabletts (1) und der Nahrungsmittel für eine Einführung und eine Herausnahme erlaubt, und einer geschlossenen Position umklappbar ist, in welcher sie sich zwischen dem ersten Bereich (3) des Tabletts befindet, der die für einen warmen Verzehr bestimmten Nahrungsmittel trägt, und einem zweiten Bereich (130) des Tabletts, welcher die Nahrungsmittel trägt, die für einen kalten Verzehr bestimmt sind.

15. Vorrichtung nach einem der Ansprüche 1 bis 14, **dadurch gekennzeichnet, daß** sie Verriegelungsmittel (55) aufweist, um die Herausnahme des Nahrungsmitteltabletts (1) vor dem Ende der Periode der wiederholten Temperaturbeaufschlagung zu verhindern.

16. Vorrichtung nach einem der Ansprüche 1 bis 15, **dadurch gekennzeichnet, daß** sie Luft-Extraktionsmittel (52) aufweist, um die Luft in der Zone der Einfassung, welche den ersten Bereich (3) des Nahrungsmitteltabletts enthält, nach der Außenseite der Glocke (2) zu extrahieren.

17. Vorrichtung nach einem der Ansprüche 1 bis 16, **dadurch gekennzeichnet, daß** die Glocke (2) ein deutlich unterschiedliches, abnehmbares Element ist, welches auf dem ersten Bereich (3) des Tabletts (1) angeordnet ist.

18. Vorrichtung nach einem der Ansprüche 1 bis 16, **dadurch gekennzeichnet, daß** die Glocke (2) ein Element ist, welches mit der Einfassung der individuellen Einheit (23) aus einem Stück besteht, und daß Antriebsmittel eine vertikale relative Verschiebung der Glocke (2) oder des Tabletts (1) in Bezug aufeinander für das Schließen und das Öffnen des Abteils sicher stellen, welches die für einen warmen Verzehr bestimmten Nahrungsmittel umschließt.

19. Vorrichtung nach einem der Ansprüche 1 bis 18, **dadurch gekennzeichnet, daß** sie besteht aus:
- einer Vielzahl von individuellen Tabletts (1), die einen ersten Bereich (3) haben, der zum Tragen eines Teils von Nahrungsmitteln angepaßt ist, die für eine warmen Verzehr bestimmt sind, und einen zweiten Bereich (130), der zum Tragen eines Teils von Nahrungsmitteln angepaßt ist, die für einen kalten Verzehr bestimmt sind, mir einer thermisch isolierenden, abnehmbaren Glocke (2), die an den ersten Bereich (3) des Tabletts anpaßbar ist, um den Anteil der Nahrungsmittel abzudecken, die für einen warmen Verzehr bestimmt sind,
- Transportmitteln (70), die eine Einfassung (71) haben, welche zur Aufnahme einer passenden Anzahl von individuellen Tabletts (1) angepaßt ist, welche die Nahrungsmittel tragen und von einer thermisch isolierenden Wand (72) umgeben sind, die mit einer Pforte (73) zum Beladen und Entladen versehen ist,
- einer Vielzahl der individuellen Einheiten (23) zur Kühlung und zur wiederholten Temperaturbeaufschlagung der Nahrungsmittel.

20. Vorrichtung nach Anspruch 19, **dadurch gekennzeichnet, daß** die Transportmittel wenigstens einen manuell verschiebbaren Wagen (70) aufweisen, der mit einem Rollengestell (74) ausgebildet ist, welches die thermisch isolierende Umfangswand (72) abstützt, die eine Einfassung (71) umgibt, die keine Abteile aufweist und seitliche Gleitschienen (75) für eine Abstützung eines Stapels von individuellen Tabletts (1) hat.

21. Verfahren zur kollektiven Verteilung von Nahrungsmitteln, bei welchem:
a) man die Nahrungsmittel vorbereitet und sie auf individuelle Tabletts (1) in einer Gemeinschaftsküche anordnet, wobei die individuellen Tabletts (1) einen ersten Bereich (3) des individuellen Tabletts haben, der den Anteil der Nahrungsmittel trägt, der für eine warmen Verzehr bestimmt ist, wobei die individuellen Tabletts (1) einen zweiten Bereich (130) des individuellen Tabletts haben, der den Anteil der Nahrungsmittel trägt, der für einen kalten Verzehr bestimmt ist, und wobei der besagte erste Bereich (3) des individuellen Tabletts eine thermisch isolierende Glocke (2) aufnehmen kann,
b) man die besagten individuellen Tabletts (1), die in der thermisch isolierten Einfassung (71) mit Nahrungsmitteln versehen sind, mit einem isothermen Transportmittel (70) der Vorrichtung nach einem der Ansprüche 19 oder 20 bis an die Orte des Verbrauchs transportiert,
c) man die besagten individuellen Tabletts (1) wieder entnimmt, die mit Nahrungsmitteln in den individuellen Einheiten (23) zur Kühlung und zur wiederholten Temperaturbaufschlagung der Nahrungsmittel der Vorrichtung nach einem der Ansprüche 1 bis 19 versehen sind, welche an jedem Ort des Verzehrs vorgesehen und von dem Verbraucher direkt zugänglich sind,
d) man selektiv die für einen warmen Verzehr bestimmten Anteile der Nahrungsmittel auf den individuellen Tabletts (1) wieder erwärmt, die in den individuellen Einheiten (23) angeordnet sind, unter Anwendung von individuellen Wärmequellen (18), welche die unter den Glocken (2) angeordneten Nahrungsmittel wieder erwärmen.
